# EUROPEAN PATENT APPLICATION

(11) **EP 4 020 267 A1**
(43) Date of publication of application: **29.06.2022**
(21) Application number: 20383143.3
(22) Date of filing: 22.12.2020
(51) Int. Cl.: G06F 21/32, G06F 21/31, G06F 21/50, H04L 29/06, H04W 12/12

(54) **ANTI-FRAUD METHOD FOR AUTHORIZING OPERATIONS**

(71) Applicant: Banco Bilbao Vizcaya Argentaria, S.A., 48005 Bilbao (ES)
(72) Inventor: MAGAÑA ORÚE, Sara, 28050 Madrid (ES); NAVARRETE SÁNCHEZ, Raúl, 28050 Madrid (ES); PADILLA JIMÉNEZ, Eduardo, 28050 Madrid (ES); HUETE GARCÍA, Javier, 28050 Madrid (ES); GONZÁLEZ CIFUENTES, Mario, 28050 Madrid (ES); SÁNCHEZ RUBIO, Jorge, 28050 Madrid (ES); RUIZ CABEZA, Malú, 28050 Madrid (ES); ARMESILLA MOYANO, Luis, 28050 Madrid (ES)
(74) Representative: ABG Intellectual Property Law, S.L.

(57) **Abstract**

The present invention relates to a computer-implemented anti-fraud method for a service entity to authorize different types of operations performed by a user over the Internet in a secure manner, assuring the identity of the user at all times. Examples of operations requested by the user can be bank transactions, card surcharges, hiring of goods or services, and online shopping.

## Description

### OBJECT OF THE INVENTION

The present invention relates to a computer-implemented anti-fraud method for a service entity to securely authorize different types of operations performed by a user over the Internet, assuring the identity of the user who is requesting authorization. Examples of operations requested by the user can be bank transactions, card surcharges, hiring of goods or services, and online shopping.

### BACKGROUND OF THE INVENTION

Today, when a user requests performing an Internet operation from a service entity, for example a bank transfer from a banking entity, said service entity will ask the user to perform an electronic signing process to validate his or her identity.

Due to the increasing number of security threats to which these operations are subjected at present, the user will usually be compelled to carry out an authentication process comprising two steps. In the first step, the client must access the application of the service entity, either via a mobile application or through a web browser, identifying him- or herself at least by means of a password previously chosen by the user him- or herself, or using his or her Tax ID Number and said password. Furthermore, the client must carry out a second authentication step in which the operation will be authorized by means of another known method, for example, by inputting a temporary single-use key or OTP (One Time Password) which is received in the user terminal by means of a short message (SMS) or by means of an alphanumeric key present in a coordinate card that is unique for each user and non-transferable.

The access keys used in this second authentication step present different security problems that depend on their distinctive characteristics and cause the operation performed by the user to be exposed to fraudulent use.

In the case of operation authorization by means of a coordinate card, the user is exposed to serious security problems in the event that the card is stolen, lost, or seen by an unauthorized third party, since said card is not coded and its keys can be accessed or photographed with no security control whatsoever. These problems increase significantly taking into account the increasingly more common need to perform operations over the Internet (payments, transfers, shopping, etc.) outside the home, which compels the user to carry said card permanently on him- or herself, with the subsequent increase in the risk of loss or theft.

Moreover, operation authorization by means of OTP via SMS leads to another series of problems affecting the user in terms of accessibility and operativity, in which there exists the limitation of requiring uninterrupted access to the telephone network which can limit access from certain low-coverage areas or from abroad, and in terms of security, in which there are increasingly more cases of fraud comprising social engineering and credential theft. These methods include, among others, those such as SMS theft by means of duplicating a SIM card, user and access key theft which, in combination with social engineering, can lead to the client revealing the key received through an SMS to a malicious third party, SMS theft by means of social engineering such as Phishing (fraudulent act committed through e-mail), Vishing (fraudulent act committed through phone call), or Smishing (fraudulent act committed through SMS), or even credential and SMS code theft by means of using overlay-based techniques, in which the user access an application layer that is overlaid on the application of the entity the user wishes to access, placed in his or her own device by a third party in order to steal his or her credentials.

The following invention proposes a solution to the preceding problems by means of a secure anti-fraud method for authorizing operations in a transparent and comfortable manner for the user requesting the operation over the Internet.

### DESCRIPTION OF THE INVENTION

The present invention proposes a solution to the preceding problems by means of a computer-implemented method for authorizing operations according to claim 1, a computer program product according to claim 18, and a data processing system according to claim 19. The dependent claims define preferred embodiments of the invention.

A first inventive aspect provides *a computer-implemented anti-fraud method for authorizing operations of users over the Internet by means of an operation authorization service executed from a device, wherein:*
- *the operation authorization service is provided by a service entity;*
- *the operation authorization service is previously activated in the device of the user;*
- *the service entity comprises at least one server and at least one database, wherein*
   ∘ *the at least one server is configured for communicating with the device of each user by means of the operation authorization service;*
   ∘ *the at least one server and the at least one database are configured for communicating with one another;*
- *the service entity comprises a list of malicious elements stored in the at least one database;*
- *the device of each user is configured for storing biometric data of the user;*
- *the user is previously registered in the operation authorization service, having the status of a registered user, such that:*
   ∘ *the at least one database is additionally configured for storing, for each registered user, a seed associated with the registered user and* a *plurality of fields related to the seed, the seed being an alphanumeric chain randomly generated by the at least one server during the registration of the user in the operation authorization service; and*
   ∘ *the device associated with each registered user comprises a secure container configured for storing the seed of the registered user in a non-exportable manner;*
*wherein the method comprises the following steps:*
*a) the operation authorization service receiving an operation request from a registered user;*
*b) the operation authorization service sending the operation request to the at least one server;*
*c) the at least one server generating a unique challenge for the operation request from the seed and the plurality of fields of the seed stored in the at least one database; where the challenge is a random alphanumeric code;*
*d) the at least one server sending the challenge to the operation authorization service and storing the challenge in the at least one database;*
*e) the operation authorization service requesting the registered user to input operation biometric data;*
*f) the operation authorization service receiving the operation biometric data input by the registered user;*
*g) the operation authorization service comparing the operation biometric data and the biometric data stored in the device;*
*h) if the biometric data and the operation biometric data match:*
   - *the operation authorization service generating a temporary single-use key from the challenge received and from the seed stored in the secure container of the device;*
   - *the operation authorization service sending the temporary single-use key to the at least one server;*
   - *the at least one server generating, a second temporary single-use key from the challenge and from the seed stored in the at least one database;*
   - *the at least one server comparing the temporary single-use key and the second temporary single-use key;*
   - *if the keys match, the at least one server authorizing the operation requested by the registered user;*
*i) concurrently with the preceding steps of the method, the at least one server checking if the operation requested by the registered user involves the use or the intervention of at least one of the malicious elements from the list of malicious elements, and if this is the case, completely or partially restricting the operation request;*
*j) concurrently with the preceding steps of the method, the at least one server analyzing:*
   - *the conduct of the registered user during the use of the operation authorization service; and*/*or*
   - *the particularities of the operation requested by the registered user; and*/*or*
   - *the context in which the registered user makes the operation request; and*
*k) the at least one server determining if at least one of the preceding analyses deviates from predetermined patterns; and if this is the* case, *completely or partially restricting the operation request.*

The method of the present invention relates to the authorization of operations, on the part of a service entity, by means of an operation authorization service such that the possibilities of said service not being used fraudulently are maximized. Throughout this document, *operation* shall be understood to be any type of procedure carried out over the Internet. Examples of operations requested by the user can be bank transactions, card surcharges, hiring of goods or services, and online shopping. Throughout this document, *service entity* shall be understood to be any company capable of providing a service which requires authorizing a user to perform an operation; in particular, a service entity is a banking entity.

The service entity, or simply entity, must provide its users with an operation interface through which they can ask for operation authorizations. Throughout the document, *operation authorization service,* authorization service, or simply service, shall be understood to comprise said interface, where it can be implemented in different forms. Preferably, the operation authorization service is implemented in the form of a mobile application. In other embodiments, the operation authorization service is implemented in the form of a web application or web page.

The operation authorization service can be executed by means of a personal device of a user having biometric capabilities, i.e., allowing the biometric data of the user owner of the device to be stored and the identity of said user recognized by means of subsequent captures of his or her biometric data. Some types of biometric recognition are fingerprint, iris, or facial recognition.

Preferably, the device (or terminal) is a mobile telephone with Internet access and biometric capabilities. In other embodiments, the device is a tablet or a computer having Internet access and biometric capabilities.

Preferably, this operation authorization service is developed by means of a Software Development Kit or SDK.

To be able to access the operation authorization service, the user must first have it activated in his or her personal device. Throughout the document, it will be understood that *activating* the operation authorization service in a device requires the user to have access to said service, for example, because he or she has downloaded the corresponding application or because he or she accesses the service by means of a browser; and requires the user to have been authenticated in said service. The authentication of the user is performed based on credentials agreed upon with the service entity. Preferably, said credentials are in the form of a username and password that are private and unique for each user.

The operation authorization service allows putting the user in contact with the service entity. To that end, the authorization service has the capacity to communicate with at least one server of the service entity. Said at least one server is additionally in communication with at least one database of the service entity with the capacity for storing information related to the users of the service entity. Preferably, the at least one server and/or the at least one database are in the cloud.

Communication between the authorization service and the at least one server is preferably carried out by means of the Transport Layer Security, TLS, protocol.

Additionally, in order for a user to be able to ask the service entity to authorize an operation, said user must be previously registered in the operation authorization service. This method entails the generation and storage of a seed both in the at least one database of the service entity and in the actual device of the user. Throughout the document, seed shall be understood to be an alphanumeric chain randomly generated by the at least one server of the service entity and is unique for each user. Said seed is the starting point for the generation of random temporary single-use keys.

The at least one database of the service entity additionally stores information related to the seed in the form of a plurality of fields. Without prejudice to the possible existence of other additional fields, examples of these fields are
- a seed identifier; or
- the algorithm used to generate the seed; or
- the period of validity and the length of each single-use key generated by the seed; or
- the seed creation date; or
- the date the seed is last used.

As discussed, the unique seed of a user is also stored in his or her personal device. For this purpose, the device must have a security area where data, in this case the seed, can be stored in a non-exportable manner. Throughout the document, it will be understood that *secure container* of the device corresponds with this security area.

Hereinafter, the difference between user and registered user should be noted. User is any user having a minimum agreement with the service entity such that said service entity offers a specific service to said user and knows certain data of said user, including his or her activation credentials. For example, if the service entity is a banking entity, a user is one of its clients. A user does not need to have the authorization service activated, nor does he or she need to be registered therein.

In contrast, a registered user is a particular type of user, i.e., one who is registered in the operation authorization service, for which he or she must have said authorization service activated in his or her device.

Therefore, once a user has the operation authorization service activated in his or her device and has successfully registered, he or she becomes a registered user who can proceed to ask the service entity authorization to perform different operations.

First, this registered user sends an operation authorization request to the service entity by means of the operation authorization service. Said service forwards the request to the at least one server that will be in charge of managing it.

To that end, the at least one server obtains, from the at least one database, the seed of the registered user requesting the operation together with the plurality of fields of the seed. With this information, the at least one server generates a random alphanumeric code which, throughout the document, shall be known with the term *challenge.* Said challenge is stored by the at least one server in the at least one database and is sent to the operation authorization service.

Once the operation authorization service receives the challenge, it sends a request to the registered user to input biometric data to confirm that the requesting registered user is indeed the registered user owner of the device. The registered user therefore inputs his or her biometric data, such as his or her fingerprint or a capture of his or her iris or face, through the device, and sends it to the authorization service.

If this biometric data (operation biometric data) matches the data stored in the device, the operation authorization service generates a temporary single-use key from the challenge received and from the seed it has stored in the secure area of the device. This temporary key is sent to the server for validation. If the biometric data does not match, the operation authorization service would again request the registered user to input biometric data, where this process may be repeated a predetermined number of times.

The validation by the at least one server comprises generating a second temporary single-use key from the challenge which was stored in the at least one database and from the actual seed stored in said at least one database. At this point, the at least one server compares both temporary single-use keys, i.e., the key it has generated and the key it has received from the authorization service, and authorizes the registered user to perform the operation if the keys match. This check can be performed more than once.

Preferably, the temporary single-use keys are generated by means of OCRA (OATH Challenge Response Algorithm).

Advantageously, the operation authorization method prevents the need for the service entity to send to the registered user a type of key necessary for performing the operation, such as a temporary single-use key, OTP, sent via SMS to the device of the registered user coordinates available in a coordinate card issued by the service entity which is unique for the registered user. Third parties who seek to perform operations in the name of the registered user can easily steal keys of this type, putting the security of the operation authorization methods using same at considerable risk. Furthermore, the user often inputs said keys manually, entailing an undeniable lack of security.

With the operation authorization method of the invention, the risk of the registered user becoming a victim of overlay-based techniques or Phishing, Vishing, and Smishing techniques is minimized because said authorization is completely transparent to the user, i.e., he or she does not have to intervene by inputting credentials, telephone numbers, or OTPs. This furthermore provides the registered user with an improved authorization request experience as it is a convenient, simple, and quick method that only requires the user to input biometric data.

An additional advantage of the authorization method is that the service entity can authorize the operation even when the registered user performs the request from abroad or from low-coverage areas since the operations are not associated with receiving SMS OTP messages, thereby preventing reception problems, telecommunications problems, or line latency problems.

During the entire operation authorization process, the at least one server performs additional fraud detection tasks and completely or partially restricts the operation request if it determines that the authorization service is being used fraudulently. Additionally, the at least one server is configured to deregister the seed of the registered user, i.e., deactivating or eliminating it from the at least one database and from the device of the registered user. This deactivation of the seed means that said registered user may no longer use the operation authorization service, at least temporarily.

On one hand, the service entity has a list of malicious elements or a black list. This list comprises a plurality of IP addresses, telephones, User ID numbers, etc., which have been classified by said entity or by other different entities as fraudulent. This list is updated with new elements every time the service entity or other entities detect that said new elements have participated in the fraudulent use of operation authorization services.

If the at least one server identifies that the operation request involves any of the fraudulent elements comprised in the list, it completely or partially restricts the operation requested by the registered user. Additionally, the at least one server can deactivate the seed of the registered user.

On the other hand, the service entity monitors the conduct of the user during the use of the operation authorization service and analyzes the context in which the service is being used and the particularities of the operation.

The conduct of the user refers to how he or she interacts with the operation authorization service. For example, if said service is an application, the way the user moves his or her finger over the screen of the smartphone, the type of biometric data he or she inputs, and the number of times the data is input, are monitored. In another example, if the service is accessed through a web page, the movement of the mouse, the typing rhythm, or the dwell time on each page is monitored.

The context in which the service is used refers to how and where the registered user accesses the service, for example, if the user is using his or her usual device, if the user has accessed the service from a usual IP and geographic location, or if the user is accessing the service in a usual time zone.

The particularities of the operation refer to the type and number of operations as well as the sums, account numbers, and telephone numbers involved in said operation.

These three aspects are monitored so that the at least one server can identify if the operation is not being carried out according to pre-established criteria.

In particular, if records of use of the service by the registered user are available because he or she has used the service on other occasions to ask for the authorization of an operation, the following are compared with said records of use: whether the user has accessed the service from the same place, with the same device, and at the same time, whether the user performs usual operations with similar sums, whether the user inputs the correct biometric data on the first try, whether the movements of the user's finger are similar to those he or she usually performs, etc.

If the user has not previously used the operation authorization service, the use of the service is compared with patterns pre-established by the service entity, which may include the registration of the use of the operation authorization service performed by the user during the registration method.

If no deviation is detected with respect to the usual use of the operation authorization service or pre-established patterns, the at least one server authorizes the operation for the registered user and registers the use of the service by said user for future comparisons.

Otherwise, the at least one server completely or partially restricts the operation request. If the suspected fraud is clear, the service entity, through the at least one server, denies the registered user the operation, and if deemed appropriate, deregisters the seed of said registered user. If the suspicion is not entirely founded, the at least one server partially restricts the operation, for example, limiting the sums involved in said operation to a maximum value.

The operation authorization method thereby allows a service entity to authorize an operation only when high guarantees of the identity of the user requesting said operation are present because:
1) The authorization requires checking the biometric data of the registered user, said biometric data being stored in his or her device. This first biometry-based check allows a high degree of security in the method since the biometric characters of a person are exclusive for said person.
2) The seed store in the at least one database of the service entity and in the secure area of the device of the registered user entails a significant increase in security given that, in both cases, the possibilities of a third party, who seeks to spoof the registered user, extracting the seeds are minimal. The use of these seeds allows the authorization to be completely transparent to the user, without having to input any type of external key that puts the security of the method at risk.
3) The anti-fraud monitoring carried out by the at least one server of the service entity is fundamental to ensure the identity of the registered user. In the event of any type of suspicion, the service entity applies more or less restrictive measures that seek to reduce the impact of a possible user identity theft.

In a particular embodiment, *the registration of the user prior to the execution of the method is performed according to the following steps:*
*1) the operation authorization service receiving a registration request from the user;*
*2) the operation authorization service sending the registration request to the at least one server;*
*3) the at least one server generating a unique authentication code for the registration request,* where the authentication code is a random alphanumeric code;
*4) the at least one server sending the authentication code to the operation authorization service;*
*5) the operation authorization service encrypting the authentication code, obtaining an encrypted authentication code;*
*6) the operation authorization service sending the encrypted authentication code to the at least one server;*
*7) the at least one server encrypting the authentication code, obtaining a second encrypted authentication code;*
*8) the at least one server comparing the encrypted authentication code and the second encrypted authentication code;*
*9) if the encrypted authentication code and the second encrypted authentication code match,*
   - *the at least one server generating a unique seed for the user;*
   - *the at least one server storing the seed in the at least one database;*
   - *the at least one server sending the seed to the operation authorization service;*
   - *the operation authorization service storing the seed in the secure container of the device;*
*10) concurrently with steps 1)-9), the at least one server checking if the registration requested by the user involves the use or the intervention of at least one of the malicious elements from the list of malicious elements, and if this is the case*, *completely or partially restricting the registration request;*
*11) concurrently with steps 1)-10) of the method, the at least one server analyzing:*
   - *the conduct of the user during the use of the operation authorization service; and*/*or*
   - *the context in which the user makes the registration request; and*
*12) the at least one server determining if at least one of the preceding analyses deviates from predetermined patterns; and if this is the* case, *completely or partially restricting the registration request.*

One of the requirements for being able to request an operation authorization from the service entity is for the user to be previously registered in the service. To that end, the operation authorization service forwards the registration request it receives from the user to the at least one server which generates a unique authentication code for said request. This authentication code is a random alphanumeric code.

The at least one server sends the authentication code to the authorization service which encrypts said code by means of a specific encryption algorithm. Preferably, the encryption consists of applying a hash function.

The encrypted authentication code is sent back to the at least one server which compares it with a second encrypted authentication code generated from the encryption of the first authentication code by means of the same encryption algorithm. If both encrypted codes match, the at least one server generates the seed for the user and stores it in the at least one database.

The seed is sent to the operation authorization service by the at least one server and is stored in the secure container of the user device which, at this point, will have the status of a registered user.

During this entire registration process, the at least one server performs additional fraud detection tasks. If it is determined that the authorization service is being used fraudulently, it completely or partially restricts the registration request.

On one hand, as discussed, the service entity has a list of malicious elements or a black list. If the at least one server identifies that the registration request involves any of the malicious elements comprised in the list, it completely or partially restricts the registration requested by the user.

On the other hand, the service entity monitors the conduct of the user during the use of the operation authorization service and analyzes the context in which the user is using the service. This monitoring is similar to that discussed above for the operation authorization process.

These two aspects are monitored so that the at least one server can identify if the operation is not being carried out according to patterns predetermined by the service entity.

If no deviation is detected with respect to these patterns, the at least one server authorizes user registration and registers the use of the service by said user for future comparisons; in particular, for when said user, now a registered user, requests an operation authorization.

Otherwise, the at least one server completely or partially restricts the registration request. In one example, a partial restriction is a temporary restriction that ends if the user provides the server with additional data that verifies his or her identity. In another example, a partial restriction entails registering the user only if he or she has made the request from a specific geographic location, so as to prevent situations of attacks from a specific country or city.

Advantageously, the security of the operation authorization method is increased because the anti-fraud monitoring and restriction policies are used from the user registration method, which would prevent users suspected of fraudulently using the operation authorization service from registering therein.

Preferably, the user is informed of the registration process by means of notifications received in his or her device, specifying the start and end of the method. More preferably, the notifications are push notifications or are received through e-mail.

In a particular embodiment, *there is required a prior step of the user or the registered user accessing the operation authorization service following the steps below:*
- *the operation authorization service receiving an access request from the user or the registered user;*
- *the operation authorization service requesting the user or registered user to input access biometric data;*
- *the operation authorization service receiving the access biometric data input by the user or registered user;*
- *the operation authorization service comparing the access biometric data and the biometric data stored in the device;*
- *if the biometric data and the access biometric data match, the operation authorization service allowing the user or the registered user to access the operation authorization service.*

To access the operation authorization service so that a user can register him- or herself or so that a registered user can ask for an operation authorization, an additional check of the biometric data of said user or registered user is required. *Access biometric data* must be understood to be the biometric data input by the user or registered user when he or she wants to access the operation authorization service.

If the access biometric data and the biometric data stored in the device do not match, the operation authorization service would again request the user or registered user to input the access biometric data, where this process may be repeated a predetermined number of times.

Advantageously, the security of the method is increased because a new check for checking the identity of the requesting party prior to any type of request is included.

In a particular embodiment, *the at least one database is additionally configured for storing, for each user, an identifier of said user and an identifier of the device of the user; and wherein*
- *the operation authorization service receives, along with the registration request, an identifier of the user to be registered and an identifier of the device to be registered;*
- *the operation authorization service sends the registration request, the identifier of the user to be registered, and the identifier of the device to be registered to the at least one server;*
- *the at least one server checks if the identifier of the user to be registered matches the identifier of the user stored in the at least one database and if the identifier of the device to be registered matches the identifier of the device stored in the at least one database; and*
- *if this is the* case, *the at least one server generates the unique authentication code for the registration request.*

The service entity additionally stores information related to the user and to his or her device in the at least one database for adding additional checks for checking the identity of the user requesting the registration.

During the operation authorization service activation step, the user sends these identifiers to the service entity. Preferably, the identifier of the user is his or her tax ID number, alien ID card number, card, or passport, and/or the identifier of the device is a serial number of said device or a random number generated by said device.

In that sense, the user registration steps advantageously reinforce the security thereof by adding this new requirement, i.e., the at least one server denies the user the registration unless the identifiers of the user and the device match, since the authentication code necessary for the registration is not generated.

In a particular embodiment, *the method comprises an additional verification step for verifying the security of the device, carried out by the at least one server concurrently with the rest of the steps of the method, comprising the following sub-steps:*
- *checking if the device presents any type of malicious software; and*/*or*
- *checking if the device has* a *plurality of operation authorization services installed therein, is rooted, and is permanently connected to the Internet; and*
- *if this is the case, the at least one server completely or partially restricts the registration request or the operation authorization request.*

The security of the operation and registration authorization processes is increased by means of an additional check for checking the security of the device from which the registered user is making the operation authorization request or the user is making the registration request.

On one hand, the at least one server analyzes if the device comprises a type of malicious software such as malware infections, resident malware, or spoofing attributes. On the other hand, the at least one server analyzes if a series of conditions which, though not particularly relevant separately, when combined are grounds for suspected fraud, is observed in the device; in particular, if the device has a plurality of operation authorization services of different service entities installed therein, if it is rooted, and if it is permanently connected to the Internet.

The device being rooted must be understood as the user owner of the device having privileged control over said device, where he or she can modify the functions integrated by default in said device.

If the at least one server identifies that the device does not meet these security requirements, the at least one server completely or partially restricts the operation registration or authorization requests. Additionally, the at least one server can deactivate the seed of a registered user.

In a particular embodiment, *the list of malicious elements of the service entity comprises malicious IP addresses, malicious telephone numbers, malicious user identifiers, and*/*or malicious bank accounts, and*
*wherein step i) of the method comprises the following sub-steps carried out by the at least one server:*
- *checking if the operation request has been made from an IP address comprised in said list; and*/*or has been made from a device the telephone number of which is comprised in said list; and*/*or has been requested by a registered user with a user identifier comprised in said list; and*/*or involves the use of a bank account comprised in said list; and,*
- *if this is the case, the at least one server completely or partially restricts the operation requested by the registered user; and*/*or*
*wherein step 10) of the method comprises the following sub-steps carried out by the at least one server:*
- *checking if the registration request has been made from an IP address comprised in said list; and*/*or has been made from a device the telephone number of which is comprised in said list; and*/*or has been requested by a user with a user identifier comprised in said list; and,*
- *if this is the case, the at least one server completely or partially restricts the registration requested by the user.*

A list of the malicious elements comprised in the black list of the service entity is set forth in this embodiment, notwithstanding the fact that there may be additional malicious elements that fall within the context of the invention.

As discussed, these malicious elements are taken into account during user operation and registration authorization processes to increase the security of the method, maximizing the probabilities of the identity of the user requesting authorization or registration being the correct one.

In a particular embodiment, *the analysis of the particularities of the operation requested by the registered user comprises analyzing:*
- *the type of requested operation; and*/*or*
- *the number of requested operations; and*/*or*
- *the sums involved in the requested operation or operations;*
- *the account number or numbers involved in the requested operation or operations; and*/*or*
- *the telephone number or numbers involved in the requested operation or operations.*

A list of the tasks carried out by the at least one server for monitoring the particularities of an operation (or operations) requested by a registered user is set forth in this embodiment, notwithstanding the fact that there may be additional tasks that fall within the context of the invention.

In a particular embodiment, *the analysis of the conduct of the registered user and*/*or of the user during the use of the operation authorization service comprises analyzing:*
- *the movement of the mouse and*/*or the finger of the registered user or user over the screen of the device; and*/*or*
- *the typing rhythm of the registered user or user; and*/*or*
- *the dwell time in each section, page, or tab of the operation authorization service; and*/*or*
- *the number of times the registered user inputs his or her biometric data in the operation authorization service; and*/*or*
- *the type of biometric data input by the registered user.*

A list of the tasks carried out by the at least one server for monitoring the conduct of a user or a registered user is set forth in this embodiment, notwithstanding the fact that there may be additional tasks that fall within the context of the invention.

In a particular embodiment, *the analysis of the context in which the registered user makes the operation request and*/*or the context in which the user makes the registration request comprise analyzing:*
- *the device from which the registered user makes the operation request or the user makes the registration request; and*/*or*
- *the IP address from which the registered user makes the operation request or the user makes the registration request; and*/*or*
- *the geographic location from which the registered user makes the operation request or the user makes the registration request; and*/*or*
- *the operating system from which the registered user makes the operation request or the user makes the registration request; and*/*or*
- *the browser from which the registered user makes the operation request or the user makes the registration request; and*/*or*
- *the time zone from which the registered user makes the operation request or the user makes the registration request.*

A list of the tasks carried out by the at least one server for monitoring the context in which a user makes a registration request or the context in which a registered user makes an operation request is set forth in this embodiment, notwithstanding the fact that there may be additional tasks that fall within the context of the invention.

In a particular embodiment, *the activation of the operation authorization service in the device of the user comprises the following sub-steps:*
- *the user inputting activation credentials previously agreed upon with the service entity in the operation authorization service;*
- *the operation authorization service sending the activation credentials to the at least one server;*
- *the at least one server validating the activation credentials; and if this is the case,*
   ∘ *the at least one server receiving the identifier of the user and the identifier of the device; and*
   ∘ *the at least one server storing the identifier of the user and the identifier of the device in the at least one database;*
- *concurrently with the rest of the activation sub-steps, the at least one server analyzing:*
   ∘ *the number of times the user inputs the activation credentials in the operation authorization service; and*/*or*
   ∘ *if the user consults the activation credentials with the service entity; and*/*or*
   ∘ *if the user requests the recovery or resetting of the activation credentials from the service entity; and*
- *the at least one server determining if at least one of the preceding analyses deviates from predetermined patterns; and if this is the case, temporarily or permanently restricting the activation of the operation authorization service.*

As discussed throughout the document, the operation authorization service must be activated in the device of the registered user. This activation is based on the user inputting credentials that were previously agreed upon with the service entity and must be validated by the at least one server. Preferably, the credentials are a username and a password.

During this activation, the sending of identifiers of the user and the device, which are stored in the at least one database for future user identity checks, occurs.

Additionally, to increase the security of the method, during the activation of the authorization service a step carried out by the at least one server for detecting fraud is included, and if it is determined that attempt is made to activate the authorization service fraudulently, said at least one server completely or partially restricts said activation.

Fraud detection is based on analyzing the interaction of the user with the service; in particular, counting the number of times the user attempts to input the credentials and checking if the user interacts with the service entity for consulting, recovering, or resetting the credentials. If the behavior of the user deviates from patterns pre-established by the service entity, the at least one server restricts the activation of the authorization service definitively, i.e., it rejects the activation of the operation authorization service for that user; or temporarily, for which it will wait to receive additional data from the user which verify his or her identity before proceeding with the activation of the service.

In a particular embodiment, *the at least one server revokes the operation authorization service for a registered user by deactivating the seed of said registered user in at least one of the following cases:*
- *the at least one server confirms that the operation requested by the registered user involves the use or the intervention of at least one of the malicious elements from the list of malicious elements;*
- *the at least one server determines that the conduct of the registered user during the use of the operation authorization service deviates from predetermined patterns;*
- *the at least one server determines that the particularities of the operation requested by the registered user deviate from predetermined patterns;*
- *the at least one server determines that the context in which the registered user makes the operation request deviates from predetermined patterns;*
- *the at least one server does not verify the security of the device of the registered user;*
- *the registered user, who has the operation authorization service activated in the device, activates the operation authorization service from a second device;*
- *the registered user reports to the service entity a suspected fraudulent use of the operation authorization service or the theft or loss of the device.*

A list of the conditions that must be met for the service entity to consider that a registered user should not be able to continue using the operation authorization service is set forth in this embodiment, notwithstanding the fact that there may be additional conditions that fall within the context of the invention.

The deactivation of the seed must be understood to be the elimination of the seed, as well as the plurality of fields related therewith, from the at least one database, and the elimination of the seed from the secure container of the registered user's device. A log informing of the deactivation of the seed is recorded in the at least one database.

In particular, the operation authorization service can be revoked if the at least one server detects a possible fraudulent use of the operation authorization service or when the registered user him- or herself reports to the service entity suspected spoofing, for example if he or she has detected unauthorized charges on his or her credit or debit card, or if the device where he or she has the operation authorization service activated has gone missing or was stolen.

Additionally, the operation authorization service can only be activated in a terminal of the user or registered user to prevent fraudulent use thereof in the event that the terminal goes missing or is stolen. If a registered user accesses the service from a device other than the usual one, the service entity performs the necessary checks to confirm the identity of the user requesting access to the service and informs the registered user, preferably by e-mail or by means of a push notification, that someone is attempting to access the operation authorization service from a device that is not the usual one.

If the identity of the registered user is verified by the service entity, the at least one server deactivates the seed of the registered user in the first device and the registration of the user in the second device is required to create a new seed. In these cases, the registered user has either simply changed his or her terminal or the first device may have gone missing or be stolen, so the authorization service therein would be revoked, thereby preventing a possible fraudulent use of the operation authorization service. It should be pointed out that if the registered user attempts to use this second device, he or she would have to have his or her biometric data stored in the device in order to be able to access the operation authorization service. For information purposes, the operation authorization service comprises a list of secure devices for each user in which they would have the user's biometric data stored; however, each user can only be registered in said service from one of said secure devices.

In contrast, if the identity of the user making the access request from a second device is not verified, the access attempt could be the result of a third party spoofing the user using the operation authorization service fraudulently from this second device. In such case, the third party would not be able to perform any operation since the active seed would still belong to the first device.

This comprehensive control of registered users allows accepting or denying operation requests based on anti-fraud criteria predetermined by the service entity, such as the existence of malware, spoofing patterns, black lists, deviated behavioral patterns, changes in the context of execution, changes in the usual operating pattern, etc. Advantageously, this comprehensive control of registered users allows preventing users suspected of fraud from using the authorization service by simply deactivating the associated seed.

In a particular embodiment, if *the at least one server restricts:*
- *an operation request completely, the at least one server denies said operation; or*
- *an operation request partially, the at least one server limits the sum involved in said operation to a predetermined maximum value; or*
- *a registration request completely, the at least one server denies the registration of the user; or*
- *a registration request partially, the at least one server denies the registration of the user if the request has been made from a specific geographic location.*

A list of the actions carried out by the at least one server when it completely or partially restricts an operation or registration request is set forth in this embodiment, notwithstanding the fact that there may be additional actions that fall within the context of the invention.

In a particular embodiment,
- *if the at least one server completely or partially restricts an operation request, completely or partially blocking a credit or debit card of a registered user; and*/*or*
- *if the at least one server completely or partially restricts an operation request, temporarily blocking the use of the operation authorization service by the registered user; and*/*or*
- *if the at least one server completely or partially restricts a registration request, temporarily blocking the use of the operation authorization service by the user; and*/*or*
- *if the at least one server completely or partially restricts a registration request, requesting additional data from the user; and*/*or*
- *if the at least one server temporarily restricts the activation of the operation authorization service, requesting additional data from the user.*

A list of the actions carried out by the at least one server when it completely or partially restricts an operation or registration request and when it temporarily restricts the activation of the operation authorization service is set forth in this embodiment, notwithstanding the fact that there may be additional actions that fall within the context of the invention.

In particular, if the at least one server requests additional data from the user that is subsequently verified by the service entity, the at least one server proceeds to register the user or activate the operation authorization service in the user's device. If said data is not verified, the at least one server restricts the registration request completely or the activation of the service definitively.

In a particular embodiment, *the seeds stored in the secure container of the device and in the at least one database are encrypted with an RSA key associated with the device.*

For the sake of security, the seed stored in the secure container of the device and the seed stored in the at least one database are encrypted so that they may be known only by the operation authorization service and the at least one server. The key for encrypting it is a random RSA key which is associated with the user's device.

Preferably, encryption is performed directly in the secure container of the device to prevent an encrypted seed from being able to be used in a device other than that used by the user during the registration process.

In a particular embodiment, *the at least one database comprises:*
*a hardware security module configured for storing, for each registered user in the operation authorization service, the seed or the encrypted seed of the registered user; the plurality of fields of the seed and cryptographic keys of the registered user; and*
*a non-relational database configured for storing, for each user of the operation authorization service, the identifier of the user, the identifier of the device associated with the user, the activation credentials of the user, and* a *serial number of the seed associated with the user when he or she is registered in the operation authorization service.*

The at least one database of the service entity comprises a non-relational database for storing all the information related to the user and the device, and a hardware security module (HSM) for storing the seed (or its encrypted version), all the information related to the seed in the form of a plurality of fields, and the cryptographic keys of the registered user. Throughout the description, HSM must be understood as a highly secured database used for saving cryptographic keys. The advantage of having this module is that the seed remains unchanged (and therefore cannot be used fraudulently for authorizing operations) even when the non-relational database may have been compromised.

The manner in which the information contained in the non-relational database and the HSM is linked is through a serial number associated with each seed, thereby allowing each seed of the HSM to be linked to a specific user and device the identifiers and additional information of which are stored in the non-relational database.

In a particular embodiment, *the sub-step of comparing the temporary single-use key and the second temporary single-use key and*/*or the sub-step of comparing the encrypted authentication code and the second encrypted authentication code is or are performed a predetermined number of times if the result of said comparison or comparisons is negative.*

The method contemplates that the comparison between the temporary single-use keys during the operation authorization method, as well as the comparison between authentication codes encrypted during the registration method, can be carried out more than once if the result of the comparison is negative. The number of times these comparisons can be carried out is predetermined.

The advantage of this multiple checks is to prevent false negatives so as to improve the perception the users or registered users have of the operation authorization system.

In a particular embodiment, *the plurality of fields related to the seed comprise:*
- *a seed identifier; or*
- *the algorithm used to generate the seed; or*
- *the type of seed encryption; or*
- *the status of the seed; or*
- *the period of validity of each single-use key generated by the seed; or*
- *the length of the single-use key generated by the seed; or*
- *the number of attempts to input credentials in the operation authorization service; or*
- *the number of attempts to input biometric data in the operation authorization service; or*
- *the number of times the use of the seed has been requested for authorizing operations requested by the user; or*
- *the time window for synchronization; or*
- *the seed creation date; or*
- *the date the seed is last used; or*
- *the last challenge generated from said seed; or*
- *a combination of any of the foregoing.*

A list of the fields related to the seed of the registered user is set forth in this embodiment, notwithstanding the fact that there may be other additional fields that fall within the context of the invention.

In particular, the status of the seed refers to whether said seed is active, inactive, or temporarily blocked. The time window for synchronization is the finite time existing for synchronizing operation authorization.

In a second inventive aspect, the invention provides a *computer program product comprising instructions such that, when the program is executed by a computer, it causes the computer to carry out any of the described embodiments of the method of the first inventive aspect.*

In a third inventive aspect, the invention provides a *data processing system comprising means for carrying out any of the described embodiments of the method of the first inventive aspect.*

All the features and/or method steps described in this specification (including the claims, description, and drawings) can be combined in any combination, with the exception of combinations of such mutually exclusive features.

### DESCRIPTION OF THE DRAWINGS

These and other features and advantages of the invention will become more apparent from the following detailed description of a preferred embodiment, given only by way of non-limiting illustrative example in reference to the attached figures.
- Figure 1: This figure illustrates the communication flow of the operation authorization method.
- Figure 2: This figure illustrates the communication flow when a user registers in the operation authorization service.
- Figure 3: This figure illustrates the communication flow when a user activates the operation authorization service.
- Figure 4: This figure illustrates the communication flow when a user or a registered user requests access to the operation authorization service.

### DETAILED DESCRIPTION OF THE INVENTION

The present invention describes a computer-implemented anti-fraud method (100) for authorizing operations (4) of users (2.1) over the Internet by means of an operation authorization service (1.2) executed from a device (1).

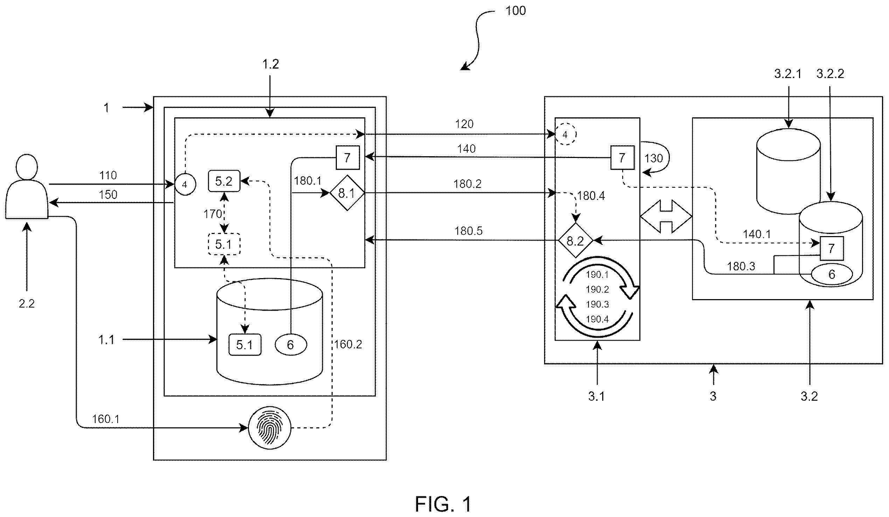

Figure 1 shows the communication flow of a particular example of the method (100) for authorizing operations over the Internet by means of an operation authorization service (1.2) which is provided by a service entity (3). In this particular example, the service entity (3) is a banking entity.

The operation authorization service (1.2) is executed from a device (1) which is associated with a user (2.2) previously registered in the service (1.2). In this particular example, the operation authorization service (1.2) is implemented in the form of a mobile application. Other implementation examples of the service (1.2) can be a web application or a web page.

To be able to execute the service (1.2) from a device (1), the device (1) must have Internet access and the capacity to recognize a user by means of biometric data. In this particular example, the device (1) is a smartphone which recognizes the fingerprint of the user (2.2) owner of the smartphone, for which it must have a capture of the fingerprint of the user (2.2) stored therein. Other examples of devices (1) can be computers or tablets.

To request the service entity (3) to authorize an operation (4), a user (2.1) must first have the service (3) activated in his or her terminal and must be registered in said service (3), where he or she acquires the status of a registered user (2.2).

As illustrated in Figure 1, the service entity (3) comprises at least one server (3.1) and at least one database (3.2) which, in this particular example, comprises a non-relational database (3.2.1) and a hardware security module (3.2.2).

The hardware security module (3.2.2) or HSM is configured for storing seeds (6), and/or their encrypted versions, associated with the registered users (2.2) together with a plurality of fields containing information about said seeds (6). Additionally, the HSM comprises cryptographic keys of the registered users (2.2).

In turn, the non-relational database (3.2.1) is configured for storing identifiers (12.1) of users, identifiers (13.1) of devices associated with the users (2.1), activation credentials of the users (2.1), and the serial numbers of the seeds (6) associated with each user (2.2) when they register in the operation authorization service (1.2). These serial numbers of the seeds (6) allow linking the information stored in the non-relational database (3.2.1) and the HSM (3.2.2.); i.e., the identifiers (12.1, 13.1) stored together with the serial number of a seed (6) in the non-relational database (3.2.1) are linked to the seed (6) to which said serial number refers and to the plurality of fields of said seed (6) stored in the HSM (3.2.2).

The seed (6) is an alphanumeric chain generated by the at least one server (3.1) during the registration process (200) of the user (2.1). This method additionally entails the storage of the seed (6) both in the HSM (3.2.2) and in the user device (1); in particular, in a secure container (1.1) or security area of the device (1) where data can be stored in a non-exportable manner.

For the sake of security, in a preferred embodiment, the seed (6) is stored encrypted with an RSA key associated with the device (1). The encryption is performed directly in the secure container (1.1) of the device (1) to prevent the encrypted seed (6) from being able to be used in a device (1) other than that used by the user (2.1) during the registration process.

As discussed, the HSM (3.2.2.) also stores information of the seed (6) in the form of a plurality of fields. In this particular example, these fields are:
- a seed identifier;
- the algorithm used to generate the seed;
- the type of seed encryption;
- the status of the seed;
- the period of validity of each single-use key generated by the seed;
- the length of the single-use key generated by the seed;
- the number of attempts to input credentials in the operation authorization service (4);
- the number of attempts to input biometric data in the operation authorization service (4);
- the number of times the use of the seed has been requested for authorizing operations (4) requested by the user;
- the time window for synchronization;
- the seed creation date;
- the date the seed is last used; and
- the last challenge (7) generated from said seed.

First, the operation authorization process requires the operation authorization service (1.2) to receive (110) the operation request (4) from a registered user (2.2) and send (120) it to the at least one server (3.1). This at least one server (3.1) generates (130) a unique challenge (7) for the operation request (4) from the seed (6) and the plurality of fields of the seed stored in the HSM (3.2.2). This challenge (7) is a random alphanumeric code.

Then, the at least one server (3.1) sends (140) the challenge (7) to the operation authorization service (1.2) and stores (140.1) it in the at least one database (3.2); in particular, in the HSM (3.2.2).

At this point, the operation authorization service (1.2) requests (150) the registered user (2.2) to input his or her biometric data (5.2) to verify his or her identity. In this particular example, as discussed, the biometric recognition is performed by means of a digital fingerprint. Other examples of biometry, such as iris, retina, or facial recognition, are also acceptable in the context of the invention.

When the operation authorization service (1.2) receives (160.2) the capture of biometric data (5.2) input (160.1) by the registered user (2.2), it compares (170) said biometric data (5.2) with the biometric data (5.1) the registered user (2.2) has stored in his or her device (1).

If the stored and captured fingerprints do not match, the operation authorization service (1.2) again requests the registered user (2.2) to input his or her fingerprint, where this process may be repeated a predetermined number of times which, in this particular example, is equal to five.

If they match, the operation authorization service (1.2) generates (180.1) a temporary single-use key (8.1) or OTP from the challenge (7) received and from the seed (6) stored in the secure container (1.1) of the device (1).

Then, it sends (180.2) this temporary single-use key (8.1) to the at least one server (3.1) which in turn generates (180.3) a second temporary single-use key (8.2) or OTP2 from the challenge (7) and from the seed (6) stored in the HSM (3.2.2).

Lastly, the at least one server (3.1) compares (180.4) OTP (8.1) and OTP2 (8.2) keys so as to authorize (180.5) the operation (4) requested by the registered user (2.2) if they match.

If the comparison between the OTPs (8.1, 8.2) is negative, it can be repeated again up to a maximum number of times. The service entity (3) predetermines this maximum number of key comparisons which, in this particular example, is equal to three.

Concurrently with this entire process, the at least one server (3.1) carries out a plurality of checks to detect a possible fraudulent use of the operation authorization service (1.2).

On one hand, it checks (190.1) if the operation requested by the registered user (2.2) involves the use or the intervention of at least one malicious element such that, if this is the case, it completely or partially restricts the operation request (4) and may even deactivate the seed (6) of the registered user (2.2).

The malicious elements are comprised in a black list owned by the service entity (3). In this example of Figure 1, this list comprises malicious IP addresses, malicious telephone numbers, malicious user identifiers, and/or malicious bank accounts. This list is updated with new elements every time the service entity or other entities detect that said new elements have participated in the fraudulent use of operation authorization services.

On the other hand, the at least one server (3.1) analyzes (190.2):
- the conduct of the registered user (2.2); in particular, it monitors the way the user (2.2) moves his or her finger over the screen of the smartphone, analyzes if the input biometric data (5.2) is a digital fingerprint and the number of times he or she inputs this biometric data (5.2), and counts the dwell time of the registered user (2.2) in each section of the application;
- the particularities of the operation (4) requested by the registered user (2.2); in particular, the type of operation he or she has requested (4), the number of operations (4) he or she has requested, and the sums, mobile telephone and account numbers involved in the operation (4); and
- the context in which the registered user (2.2) makes the operation request (4); in particular, checking if the device (1), the IP address, the geographic location, and the time zone in which the operation request (4) is made, are the usual ones for the registered user (2.2).

In other examples in which the operation authorization service (1.2) is implemented in the form of a web application or web page, these analyses are adapted to these other modalities. For example, to analyze the conduct of the registered user (2.2), the movement of the mouse, the typing rhythm, and the dwell time on each page or tab of the web can be monitored. On the other hand, to analyze the context in which the registered user (2.2) makes the operation request (4), it is additionally checked if the operating system and the web browser used are the usual ones for the registered user (2.2).

Based on these analyses, the at least one server (3.1) completely or partially restricts the operation request (4). To that end, it determines (190.3) if at least one of these analyses deviates from patterns predetermined by the service entity (3). These patterns can be based on standard users or on the registered user (2.2) him- or herself. In the second case, the patterns are determined depending on the use that the registered user (2.2) made of the service (1.2) on other occasions to ask for an operation authorization or during the registration process itself.

If a deviation with respect to the usual use of the authorization service (1.2) or pre-established patterns is not determined (190.3), the at least one server (3.1) authorizes the operation (4) for the registered user (2.2) and, optionally, records the use of the service (1.2) of said user (2.2) for future comparisons.

Otherwise, the at least one server (3.1) completely or partially restricts the operation request (4). If the suspected fraud is clear, the service entity (3), through the at least one server (3.1), denies the registered user (2.2) the operation (4) and may even deactivate the seed (6) of said registered user (2.2). If the suspicion is not entirely founded, the at least one server (3.1) partially restricts the operation (4).

Additionally, the operation (4) may be completely or partially restricted by the at least one server (3.1) if the security of the device (1) of the registered user (2.2) is not verified (190.4). To that end, the at least one server (3.1) performs two other different checks which significantly increase the security of the method (100):
- checking if the device (1) presents any type of malicious software; and/or
- checking if the device (1) has a plurality of operation authorization services installed therein, is rooted, and is permanently connected to the Internet.

If this is the case, the at least one server (3.1) completely or partially restricts the operation authorization request (4). A complete restriction means that the at least one server (3.1) denies said operation (4) and a partial restriction means that the at least one server (3.1) limits the sum involved in said operation (4) to a predetermined maximum value.

Additionally, the at least one server (3.1) can completely or partially block a credit or debit card of a registered user (2.2) and temporarily block the use of the operation authorization service (1.2) by the registered user (2.2).

If the at least one server (3.1) deems it necessary, the operation authorization service (1.2) may even revoke a registered user (2.2) by deactivating the seed (6) of said registered user (2.2).

Other scenarios in which this revocation by the operation authorization service (1.2) may occur are as follows:
- if the registered user (2.2), who has the operation authorization service (1.2) activated in the device (1), activates the operation authorization service (1.2) from a second device (1); or
- if the registered user (2.2) reports to the service entity (3) a suspected fraudulent use of the operation authorization service (1.2) or the theft or loss of the device (1).

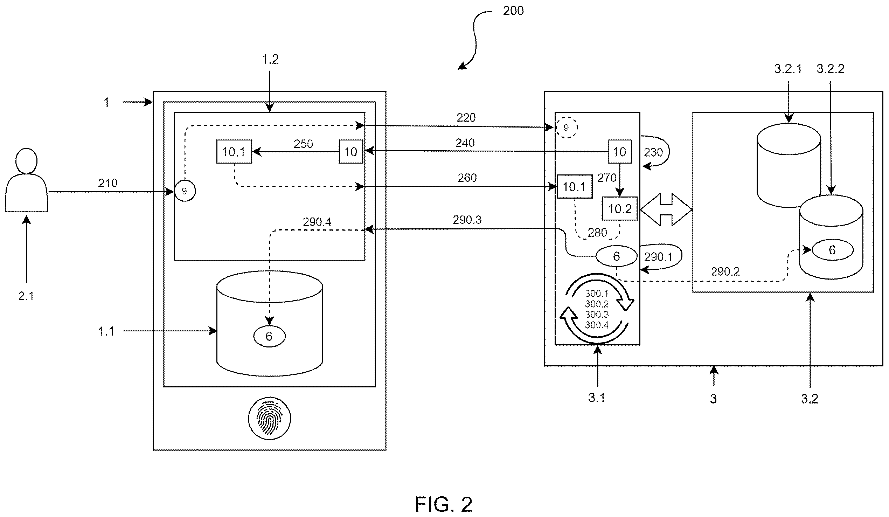

Figure 2 shows a communication flow between the operation authorization service (1.2) itself and the service entity (3) when a user (2.1) registers (200) in the operation authorization service (1.2). This registration process (200) is performed prior to executing the anti-fraud method (100) for authorizing operations (4).

The registration (200) requires the user (2.1) to have the operation authorization service (1.2) activated in his or her device (1), from which the user (2.1) may request registration (200) prior to the method (100) for authorizing operations (4). This device (1) must have a secure container (1.1) configured for storing data in a secure and non-exportable manner.

As illustrated in Figure 2, the service entity (3) comprises at least one server (3.1) configured for communicating with the device (1) of the user (2.1) by means of the operation authorization service (1.2) and at least one database (3.2) configured for storing data related to each registered user (2.2) and at least one list of malicious elements. The at least one server (3.1) and the at least one database (3.2) are configured for communicating with one another.

In this particular example, the database (3.2) comprises a non-relational database (3.2.1) and a hardware security module (3.2.2) or HSM.

The HSM (3.2.2) stores seeds (6) and/or their encrypted versions associated with users who have already registered (2.2), together with a plurality of fields containing information about said seeds (6). Additionally, the HSM comprises cryptographic keys of the registered users (2.2). The non-relational database (3.2.1) in turn stores identifiers (12.1) of users, identifiers (13.1) of devices associated with the users (2.1, 2.2), activation credentials of the users (2.1), and the serial numbers of the seeds (6).

To carry out registration (200), the operation authorization service (1.2) first receives (210) a registration request (9) from the user (2.1). Then, the operation authorization service (1.2) sends (220) the registration request (9) to the at least one server (3.1). Once the registration request (9) is received, the at least one server (3.1) generates (230) a unique authentication code (10) for the registration request (9), the authentication code (10) being a random alphanumeric code. In this particular example, it is a code having six random numbers.

At this point, the at least one server (3.1) sends (240) the authentication code (10) to the operation authorization service (1.2). Once the authentication code (10) is received, the operation authorization service (1.2) encrypts (250) it, obtaining an encrypted authentication code (10.1), and sends it (260) back to the at least one server (3.1).

Next, the at least one server (3.1) encrypts (270) its copy of the authentication code (10), obtaining a second encrypted authentication code (10.2). Then, the at least one server (3.1) compares the first encrypted authentication code (10.1) with the second encrypted authentication code (10.2).

If the comparison between the encrypted authentication codes (10.1, 10.2) is negative, it can be repeated again up to a maximum number of times. The service entity (3) predetermines this maximum number of code comparisons which, in this particular example, is equal to three.

If both encrypted authentication codes (10.1, 10.2) match, the at least one server (3.1) generates (290.1) a unique seed (6) for the user (2.1) which the at least one server (3.1) stores (290.2) in the at least one database (3.2) and sends (290.3) to the operation authorization service (1.2). The operation authorization service (1.2) in turn stores (290.4) the seed (6) in the secure container (1.1) of the device (1) of the user (2.1). At this point, the user (2.1) acquires the status of a registered user (2.2).

For the sake of security, in a preferred embodiment, the seed (6) is stored encrypted with an RSA key associated with the device (1). The encryption is performed directly in the secure container (1.1) of the device (1) to prevent the encrypted seed (6) from being able to be used in a device (1) other than that used by the user (2.1) during the registration process.

Concurrently with this entire registration process (200), the at least one server (3.1) carries out a plurality of checks to detect a possible fraudulent use of the operation authorization service (1.2).

On one hand, it checks (300.1) if the registration (9) requested by the user (2.1) involves the use or intervention of at least one of the malicious elements from the list of malicious elements, i.e., black list, stored in the at least one database (3.2) such that, if this is the case, it completely or partially restricts the registration request (9) of the user (2.1). Otherwise, it authorizes said registration (9) and the user (2.1) acquires the status of a registered user (2.2).

In this example of Figure 2, the black list comprises malicious IP addresses, malicious telephone numbers, malicious user identifiers, and/or malicious bank accounts.

On the other hand, the at least one server (3.1) analyzes (300.2):
- the conduct of the user (2.1); in particular, it monitors the way the user (2.1) moves his or her finger over the screen of the smartphone and counts the dwell time of the user (2.1) in each section of the application;
- the context in which the registered user (2.1) makes the registration request (9); in particular, checking if the device (1), the IP address, the geographic location, and the time zone in which the request is made are the usual ones for this user (2.1).

In other examples in which the operation authorization service (1.2) is implemented in the form of a web application or web page, these analyses are adapted to these other modalities. For example, to analyze the conduct of the user (2.1), the movement of the mouse, the typing rhythm, and the dwell time on each page or tab of the web can be monitored. On the other hand, to analyze the context in which the user (2.1) makes the registration request (9), it is additionally checked if the operating system and the web browser used are the usual ones for the user (2.1).

Based on these analyses, the at least one server (3.1) completely or partially restricts the registration request (9). To that end, it determines (300.3) if at least one of these analyses deviates from patterns predetermined by the service entity (3), and if this is the case, it completely or partially restricts the registration request (9). Otherwise, it authorizes said registration (9) and the user (2.1) acquires the status of a registered user (2.2).

Additionally, the registration (9) may be completely or partially restricted by the at least one server (3.1) if the security of the device (1) of the user (2.1) is not verified (300.4). To that end, the at least one server (3.1) performs two other different checks which significantly increase the security of the registration (200) and, therefore, of the method (100):
- checking if the device (1) presents any type of malicious software; and/or
- checking if the device (1) has a plurality of operation authorization services installed therein, is rooted, and is permanently connected to the Internet.

If this is the case, the at least one server (3.1) completely or partially restricts the registration authorization request (9). A complete restriction means that the at least one server (3.1) denies said registration (9) and a partial restriction means that the at least one server (3.1) denies the registration (9) of the user (2.1) if the request has been made from a specific geographic location.

Additionally, the at least one server (3.1) can temporarily block the use of the operation authorization service by the user (2.1) and request additional data from the user (2.1) to verify his or her identity. If said verification takes place, the at least one server (3.1) would authorize the registration of the user (2.1) and the user would acquire the status of a registered user (2.2).

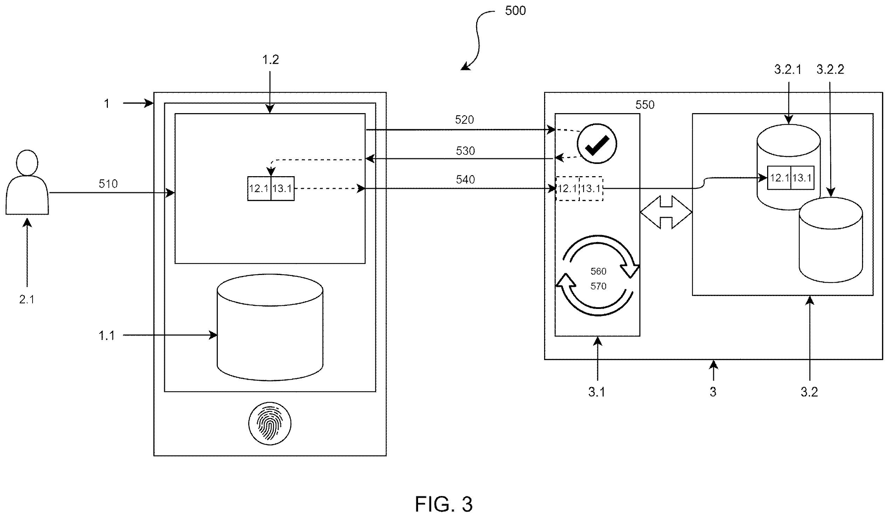

Figure 3 illustrates the communication flow when a user (2.1) activates (500) the operation authorization service (1.2).

As discussed, for a user (2.1) to be able to register (9) him- or herself and subsequently ask for an authorization from the service entity (3) to perform an operation (4), he or she must have the operation authorization service (3) activated in his or her device (1).

To that end, he or she must input (510) activation credentials previously agreed upon with the service entity (3) in the operation authorization service (1.2). In this specific example, the credentials are a username and a password.

Then, the operation authorization service (1.2) sends (520) the activation credentials to the at least one server (3.1) which is in charge of validating (530) them. The information which allows validating (530) the credentials is stored in the at least one database (3.2); in particular, in the non-relational database (3.2.1).

If the at least one server (3.1) validates the credentials, it receives (540) an identifier (12.1) of the user and an identifier (13.1) of his or her device. Then, it stores both identifiers (12.1, 13.1) in the at least one database (3.2); in particular, in the non-relational database (3.2.1).

Concurrently with this entire activation process, the at least one server (3.1) carries out a plurality of checks to detect a possible fraudulent use of the operation authorization service (1.2).

These checks are based on analyzing (560) the number of times the user (2.1) inputs the activation credentials in the operation authorization service (1.2) and checking if the user (2.1) consults the activation credentials with the service entity (3) or requests the recovery or resetting of the activation credentials from said service entity (3).

If at least one of the preceding analyses deviates from predetermined patterns established by the service entity (3), the at least one server (3.1) temporarily or definitively restricts the activation of the operation authorization service (1.2).

A definitive restriction means that the operation authorization service (1.2) is not activated for the user (2.1) in his or her device (1) and a temporary restriction requires the at least one server (3.1) to request additional data from the user (2.1) to verify his or her identity. If said verification takes place, the at least one server (3.1) would authorize the activation (500) of the operation authorization service (1.2).

Once the activation process (500) is completed, the user (2.1) can proceed with the registration process (200). The identifier (12.1) of the user and the identifier (13.1) of the device are used during said registration process (200) as an additional security measure. Therefore, during said registration process (200), the operation authorization service (1.2) receives, along with the registration request (9), an identifier (12.2) of the user to be registered and an identifier (13.2) of the device to be registered.

Then, the operation authorization service (1.2) sends the registration request (9), the identifier (12.2) of the user to be registered, and the identifier (13.2) of the device to be registered to the at least one server (3.1) which checks if the identifier (12.2) of the user to be registered matches the identifier (12.1) of the user stored in the at least one database (3.2), and if the identifier of the device to be registered (13.2) matches the identifier (13.1) of the device stored in the at least one database (3.2).

Only if they indeed match would the at least one server (3.1) generate the unique authentication code (10) that would allow completing the registration process (200).

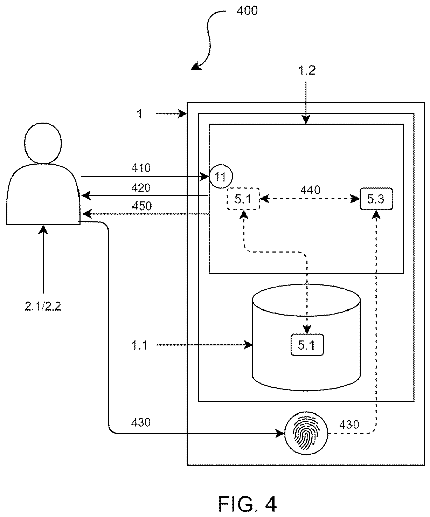

Figure 4 illustrates the communication flow when a user (2.1), who wants to register in the service (1.2), or a registered user (2.2), who wants to request authorization for an operation (4), requests access (400) to the operation authorization service (1.2).

First, the operation authorization service (1.2) receives (410) the access request (11) from the user (2.1) or the registered user (2.2). At this point, the operation authorization service (1.2) requests (420) the user (2.1) or registered user (2.2) to input a capture of his or her biometric data (5.3). In this particular example, the biometric recognition is performed by fingerprint.

Then, the operation authorization service (1.2) receives (430) the biometric data (5.3) input by the user (2.1) or registered user (2.2), and lastly, the operation authorization service (1.2) compares (440) the captured biometric data (5.3) it receives with the biometric data (5.1) stored in the device (1).

If they do not match, the operation authorization service (1.2) will again request the registered user (2.2) to input his or her fingerprint and the comparison is repeated, where this process may be repeated a predetermined number of times which, in this particular example, is equal to five. When they match, the operation authorization service (1.2) allows (450) the user (2.1) or the registered user (2.2) to access the operation authorization service (1.2).

## Claims

1. A computer-implemented anti-fraud method (100) for authorizing operations (4) of users (2.1) over the Internet by means of an operation authorization service (1.2) executed from a device (1), wherein:
• the operation authorization service (1.2) is provided by a service entity (3);
• the operation authorization service (1.2) is previously activated in the device (1) of the user (2.1);
• the service entity (3) comprises at least one server (3.1) and at least one database (3.2), wherein
∘ the at least one server (3.1) is configured for communicating with the device (1) of each user (2.1) by means of the operation authorization service (1.2);
∘ the at least one server (3.1) and the at least one database (3.2) are configured for communicating with one another;
• the service entity (3) comprises a list of malicious elements stored in the at least one database (3.2);
• the device (1) of each user (2.1) is configured for storing biometric data (5.1) of the user (2.1);
• the user (2.1) is previously registered in the operation authorization service (1.2), having the status of a registered user (2.2), such that:
∘ the at least one database (3.2) is additionally configured for storing, for each registered user (2.2), a seed (6) associated with the registered user (2.2) and a plurality of fields related to the seed, the seed being an alphanumeric chain randomly generated by the at least one server (3.1) during the registration of the user (2.1) in the operation authorization service (1.2); and
∘ the device (1) associated with each registered user (2.2) comprises a secure container (1.1) configured for storing the seed (6) of the registered user (2.2) in a non-exportable manner;
wherein the method (100) comprises the following steps:
a) the operation authorization service (1.2) receiving (110) an operation request (4) from a registered user (2.2);
b) the operation authorization service (1.2) sending (120) the operation request (4) to the at least one server (3.1);
c) the at least one server (3.1) generating (130) a unique challenge (7) for the operation request (4) from the seed (6) and the plurality of fields of the seed stored in the at least one database (3.2); where the challenge (7) is a random alphanumeric code;
d) the at least one server (3.1) sending (140) the challenge (7) to the operation authorization service (1.2) and storing (140.1) the challenge (7) in the at least one database (3.2);
e) the operation authorization service (1.2) requesting (150) the registered user (2.2) to input operation biometric data (5.2);
f) the operation authorization service (1.2) receiving (160.2) the operation biometric data (5.2) input (160.1) by the registered user (2.2);
g) the operation authorization service (1.2) comparing (170) the operation biometric data (5.2) and the biometric data (5.1) stored in the device (1);
h) if the biometric data and the operation biometric data (5.1, 5.2) match:
- the operation authorization service (1.2) generating (180.1) a temporary single-use key (8.1) from the challenge (7) received and from the seed (6) stored in the secure container (1.1) of the device (1);
- the operation authorization service (1.2) sending (180.2) the temporary single-use key (8.1) to the at least one server (3.1);
- the at least one server (3.1) generating (180.3) a second temporary single-use key (8.2) from the challenge (7) and from the seed (6) stored in the at least one database (3.2);
- the at least one server (3.1) comparing (180.4) the temporary single-use key (8.1) and the second temporary single-use key (8.2);
- if the keys (8.1, 8.2) match, the at least one server (3.1) authorizing (180.5) the operation (4) requested by the registered user (2.2);
i) concurrently with the preceding steps of the method (100), the at least one server (3.1) checking (190.1) if the operation requested by the registered user (2.2) involves the use or the intervention of at least one of the malicious elements from the list of malicious elements, and if this is the case, completely or partially restricting the operation request (4);
j) concurrently with the preceding steps of the method (100), the at least one server (3.1) analyzing (190.2):
- the conduct of the registered user (2.2) during the use of the operation authorization service (1.2); and/or
- the particularities of the operation (4) requested by the registered user (2.2); and/or
- the context in which the registered user (2.2) makes the operation request (4); and
k) the at least one server (3.1) determining (190.3) if at least one of the preceding analyses deviates from predetermined patterns; and if this is the case, completely or partially restricting the operation request (4).

2. The method (100) according to claim 1, wherein the registration (200) of the user (2.1) prior to the execution of the method (100) is performed according to the following steps:
1) the operation authorization service (1.2) receiving (210) a registration request (9) from the user (2.1);
2) the operation authorization service (1.2) sending (220) the registration request (9) to the at least one server (3.1);
3) the at least one server (3.1) generating (230) a unique authentication code (10) for the registration request (9), where the authentication code (10) is a random alphanumeric code;
4) the at least one server (3.1) sending (240) the authentication code (10) to the operation authorization service (1.2);
5) the operation authorization service (1.2) encrypting (250) the authentication code (10), obtaining an encrypted authentication code (10.1);
6) the operation authorization service (1.2) sending (260) the encrypted authentication code (10.1) to the at least one server (3.1);
7) the at least one server (3.1) encrypting (270) the authentication code (10), obtaining a second encrypted authentication code (10.2);
8) the at least one server (3.1) comparing (280) the encrypted authentication code (10.1) and the second encrypted authentication code (10.2);
9) if the encrypted authentication code (10.1) and the second encrypted authentication code (10.2) match,
- the at least one server (3.1) generating (290.1) a unique seed (6) for the user (2.1);
- the at least one server (3.1) storing (290.2) the seed (6) in the at least one database (3.2);
- the at least one server (3.1) sending (290.3) the seed (6) to the operation authorization service (1.2);
- the operation authorization service (1.2) storing (290.4) the seed in the secure container (1.1) of the device (1);
10) concurrently with steps 1)-9), the at least one server (3.1) checking (300.1) if the registration requested by the user (2.1) involves the use or the intervention of at least one of the malicious elements from the list of malicious elements, and if this is the case, completely or partially restricting the registration request (9);
11) concurrently with steps 1)-10) of the method (100), the at least one server (3.1) analyzing (300.2):
- the conduct of the user (2.1) during the use of the operation authorization service (1.2); and/or
- the context in which the user (2.1) makes the registration request (9); and
12) the at least one server (3.1) determining (300.3) if at least one of the preceding analyses deviates from predetermined patterns; and if this is the case, completely or partially restricting the registration request (9).

3. The method (100) according to any of the preceding claims which requires a prior step of the user (2.1) or the registered user (2.2) accessing the operation authorization service (1.2) following the steps below:
- the operation authorization service (1.2) receiving (410) an access request (11) from the user (2.1) or the registered user (2.2);
- the operation authorization service (1.2) requesting (420) the user (2.1) or registered user (2.2) to input access biometric data (5.3);
- the operation authorization service (1.2) receiving (430) the access biometric data (5.3) input by the user (2.1) or registered user (2.2);
- the operation authorization service (1.2) comparing (440) the access biometric data (5.3) and the biometric data (5.1) stored in the device (1);
- if the biometric data and the access biometric data (5.1, 5.3) match, the operation authorization service (1.2) allowing (450) the user (2.1) or the registered user (2.2) to access the operation authorization service (1.2).

4. The method (100) according to claim 2 or 3, wherein the at least one database (3.2) is additionally configured for storing, for each user (2.1), an identifier (12.1) of said user and an identifier (13.1) of the device of the user (2.1); and wherein
- the operation authorization service (1.2) receives, along with the registration request (9), an identifier (12.2) of the user to be registered and an identifier (13.2) of the device to be registered;
- the operation authorization service (1.2) sends the registration request (9), the identifier (12.2) of the user to be registered, and the identifier (13.2) of the device to be registered to the at least one server (3.1);
- the at least one server (3.1) checks if the identifier (12.2) of the user to be registered matches the identifier (12.1) of the user stored in the at least one database (3.2) and if the identifier of the device to be registered (13.2) matches the identifier (13.1) of the device stored in the at least one database (3.2); and
- if this is the case, the at least one server (3.1) generates the unique authentication code (10) for the registration request (9).

5. The method (100) according to any of the preceding claims comprising an additional verification step (190.4, 300.4) for verifying the security of the device, carried out by the at least one server (3.1) concurrently with the rest of the steps of the method (100), comprising the following sub-steps:
- checking if the device (1) presents any type of malicious software; and/or
- checking if the device (1) has a plurality of operation authorization services installed therein, is rooted, and is permanently connected to the Internet; and
- if this is the case, the at least one server (3.1) completely or partially restricts the registration request (9) or the operation authorization request (4).

6. The method (100) according to any of the preceding claims, wherein the list of malicious elements of the service entity (3) comprises malicious IP addresses, malicious telephone numbers, malicious user identifiers, and/or malicious bank accounts, and
wherein step i) of the method (100) comprises the following sub-steps carried out by the at least one server (3.1):
- checking if the operation request (4) has been made from an IP address comprised in said list; and/or has been made from a device the telephone number of which is comprised in said list; and/or has been requested by a registered user (2.2) with a user identifier comprised in said list; and/or involves the use of a bank account comprised in said list; and,
- if this is the case, the at least one server (3.1) completely or partially restricts the operation (4) requested by the registered user (2.2); and/or
wherein step 10) of the method (100) comprises the following sub-steps carried out by the at least one server (3.1):
- checking if the registration request (9) has been made from an IP address comprised in said list; and/or has been made from a device the telephone number of which is comprised in said list; and/or has been requested by a user (2.1) with a user identifier comprised in said list; and,
- if this is the case, the at least one server (3.1) completely or partially restricts the registration (9) requested by the user (2.1).

7. The method (100) according to any of the preceding claims, wherein the analysis of the particularities of the operation (4) requested by the registered user (2.2) comprises analyzing:
- the type of requested operation (4); and/or
- the number of requested operations (4); and/or
- the sums involved in the requested operation or operations (4);
- the account number or numbers involved in the requested operation or operations (4); and/or
- the telephone number or numbers involved in the requested operation or operations (4).

8. The method (100) according to any of the preceding claims, wherein the analysis of the conduct of the registered user (2.2) and/or of the user (2.1) during the use of the operation authorization service (1.2) comprises analyzing:
- the movement of the mouse and/or the finger of the registered user (2.2) or user (2.1) over the screen of the device (1); and/or
- the typing rhythm of the registered user (2.2) or user (2.1); and/or
- the dwell time in each section, page, or tab of the operation authorization service (1.2); and/or
- the number of times the registered user (2.2) inputs his or her biometric data in the operation authorization service (1.2); and/or
- the type of biometric data (2.2) input by the registered user (2.2).

9. The method (100) according to any of the preceding claims, wherein the analysis of the context in which the registered user (2.2) makes the operation request (4) and/or the context in which the user (2.1) makes the registration request (9) comprises analyzing:
- the device from which the registered user (2.2) makes the operation request (4) or the user (2.1) makes the registration request (9); and/or
- the IP address from which the registered user (2.2) makes the operation request (4) or the user (2.1) makes the registration request (9); and/or
- the geographic location from which the registered user (2.2) makes the operation request (4) or the user (2.1) makes the registration request (9); and/or
- the operating system from which the registered user (2.2) makes the operation request (4) or the user (2.1) makes the registration request (9); and/or
- the browser from which the registered user (2.2) makes the operation request (4) or the user (2.1) makes the registration request (9); and/or
- the time zone from which the registered user (2.2) makes the operation request (4) or the user (2.1) makes the registration request (9).

10. The method (100) according to any of the preceding claims, wherein the activation of the operation authorization service (1.2) in the device (1) of the user (2.1) comprises the following sub-steps:
- the user (2.1) inputting (510) activation credentials previously agreed upon with the service entity (3) in the operation authorization service (1.2);
- the operation authorization service (1.2) sending (520) the activation credentials to the at least one server (3.1);
- the at least one server (3.1) validating (530) the activation credentials; and if this is the case,
∘ the at least one server (3.1) receiving (540) the identifier (12.1) of the user and the identifier (13.1) of the device; and
∘ the at least one server (3.1) storing (550) the identifier (12.1) of the user and the identifier (13.1) of the device in the at least one database (3.2);
- concurrently with the rest of the activation sub-steps, the at least one server (3.1) analyzing (560):
∘ the number of times the user (2.1) inputs the activation credentials in the operation authorization service (1.2); and/or
∘ if the user (2.1) consults the activation credentials with the service entity (3); and/or
∘ if the user (2.1) requests the recovery or resetting of the activation credentials from the service entity (3); and
- the at least one server (3.1) determining (570) if at least one of the preceding analyses deviates from predetermined patterns; and if this is the case, temporarily or permanently restricting the activation of the operation authorization service (1.2).

11. The method (100) according to any of the preceding claims, wherein the at least one server (3.1) revokes the operation authorization service (1.2) for a registered user (2.2) by deactivating the seed (6) of said registered user (2.2) in at least one of the following cases:
- the at least one server (3.1) confirms that the operation requested by the registered user (2.2) involves the use or the intervention of at least one of the malicious elements from the list of malicious elements;
- the at least one server (3.1) determines that the conduct of the registered user (2.2) during the use of the operation authorization service (1.2) deviates from predetermined patterns;
- the at least one server (3.1) determines that the particularities of the operation (4) requested by the registered user (2.2) deviate from predetermined patterns;
- the at least one server (3.1) determines that the context in which the registered user (2.2) makes the operation request (4) deviates from predetermined patterns;
- the at least one server (2) does not verify the security of the device (1) of the registered user (2.2);
- the registered user (2.2), who has the operation authorization service (1.2) activated in the device (1), activates the operation authorization service (1.2) from a second device (1);
- the registered user (2.2) reports to the service entity (3) a suspected fraudulent use of the operation authorization service (1.2) or the theft or loss of the device (1).

12. The method (100) according to any of the preceding claims, wherein if the at least one server (3.1) restricts:
- an operation request (4) completely, the at least one server (3.1) denies said operation (4); or
- an operation request (4) partially, the at least one server (3.1) limits the sum involved in said operation (4) to a predetermined maximum value; or
- a registration request (9) completely, the at least one server (3.1) denies the registration (9) of the user (2.1); or
- a registration request (9) partially, the at least one server (3.1) denies the registration (9) of the user (2.1) if the request has been made from a specific geographic location.

13. The method (100) according to any of the preceding claims, further comprising:
- if the at least one server (3.1) completely or partially restricts an operation request (4), completely or partially blocking a credit or debit card of a registered user (2.2); and/or
- if the at least one server completely or partially restricts an operation request (4), temporarily blocking the use of the operation authorization service by the registered user (2.2); and/or
- if the at least one server completely or partially restricts a registration request (9), temporarily blocking the use of the operation authorization service by the user (2.1); and/or
- if the at least one server completely or partially restricts a registration request (9), requesting additional data from the user (2.1); and/or
- if the at least one server temporarily restricts the activation of the operation authorization service (1.2), requesting additional data from the user (2.1).

14. The method (100) according to any of the preceding claims, wherein the seeds (6) stored in the secure container (1.1) of the device (1) and in the at least one database (3.2) are encrypted with an RSA key associated with the device (1).

15. The method (100) according to any of the preceding claims, wherein the at least one database (3.2) comprises:
a hardware security module (3.2.2) configured for storing, for each registered user (2.2) in the operation authorization service (1.2), the seed (6) or the encrypted seed of the registered user (2.2); the plurality of fields of the seed and cryptographic keys of the registered user (2.2); and
a non-relational database (3.2.1) configured for storing, for each user of the operation authorization service (1.2), the identifier (12.1) of the user, the identifier (13.1) of the device associated with the user (2.1), the activation credentials of the user (2.1), and a serial number of the seed (6) associated with the user when he or she is registered in the operation authorization service (1.2).

16. The method (100) according to any of the preceding claims, wherein the sub-step of comparing the temporary single-use key (8.1) and the second temporary single-use key (8.2) and/or the sub-step of comparing the encrypted authentication code (10.1) and the second encrypted authentication code (10.2) is or are performed a predetermined number of times if the result of said comparison or comparisons is negative.

17. The method (100) according to any of the preceding claims, wherein the plurality of fields related to the seed comprise:
- a seed identifier; or
- the algorithm used to generate the seed; or
- the type of seed encryption; or
- the status of the seed; or
- the period of validity of each single-use key generated by the seed; or
- the length of the single-use key generated by the seed; or
- the number of attempts to input credentials in the operation authorization service (4); or
- the number of attempts to input biometric data in the operation authorization service (4); or
- the number of times the use of the seed has been requested for authorizing operations (4) requested by the user; or
- the time window for synchronization; or
- the seed creation date; or
- the date the seed is last used; or
- the last challenge (7) generated from said seed; or
- a combination of any of the foregoing.

18. A computer program product comprising instructions such that, when the program is executed by a computer, it causes the computer to carry out the steps of the method (100) according to any of the preceding claims.

19. A data processing system comprising means for carrying out the steps of the method (100) according to any of claims 1 to 17.
